# EUROPEAN PATENT APPLICATION

(11) **EP 4 345 259 A1**
(43) Date of publication of application: **03.04.2024**
(21) Application number: 23199778.4
(22) Date of filing: 26.09.2023
(51) Int. Cl.: F01D 21/00, G01P 5/26

(54) **SHOCK WAVE DETECTION SYSTEM, METHOD OF DETECTING SHOCK WAVE AND AIRCRAFT**

(30) Priority: 27.09.2022 JP 2022154275
(71) Applicant: Subaru Corporation, Tokyo 150-8554 (JP)
(72) Inventor: SATO, Ryosuke, Tokyo, 150-8554 (JP); TAKAYA, Ryota, Tokyo, 150-8554 (JP)
(74) Representative: Meissner Bolte Partnerschaft mbB

(57) **Abstract**

A shock wave detection system includes a light beam emitter, a light beam receiver and an analysis unit. The light beam emitter emits a light beam oblique to a direction of an air flow through which a shock wave may propagate. The light beam receiver receives the light beam that has passed through the air flow. The analysis unit is configured to detect a presence and a position of the shock wave based on a change in a receiving position of the light beam by the light beam receiver.

## Description

### FIELD

Embodiments described herein relate generally to a shock wave detection system, a method of detecting a shock wave and an aircraft.

### BACKGROUND

Conventionally, various techniques are known for detecting a position of a shock wave generated in an engine intake or the like of a supersonic aircraft (for example, refer to Japanese Patent Application Publication JP2009-516855A, Japanese Patent Application Publication JPH05-180689A and Japanese Patent Application Publication JP2006-153549A). Measuring a position of a shock wave allows controlling an engine so that an appropriate shock wave may be generated in the engine.

The method of detecting a position of a shock wave described in Japanese Patent Application Publication JP2009-516855A focuses on the phenomenon that a laser beam irradiated perpendicularly to a traveling direction of a shock wave swings when the laser beam overlaps with the wave front of the shock wave. Therefore, in this method, a position of a shock wave is detected by measuring an amount of deflection of an irradiated laser beam. Meanwhile, in the method described in Japanese Patent Application Publication JPH05-180689A, a reflection position of a shock wave is identified by observing a color distribution with a video camera.

The method described in Japanese Patent Application Publication JPH05-180689A is a typical conventional method of detecting a position of a shock wave, which is a method of detecting a position of a shock wave by disposing a pressure sensor, such as a pressure hole, on a wall surface where the shock wave is generated, and measuring the pressure with the pressure sensor. Specifically, a position of a shock wave is identified by utilizing the fact that a pressure difference arises before and after any shock wave passes through the pressure sensor.

In order to accurately detect a position of a shock wave under the conventional method of detecting a position of a shock wave, it is necessary to dispose a large number of laser beams or pressure sensors in a range in which the shock wave moves. In particular, there is a problem that a pressure hole formed on a wall surface generates a step on the wall surface, and thereby an air flow field in the vicinity of the pressure hole is influenced. When air flows at a supersonic speed, a shock wave is generated due to the step on the wall surface, which may adversely affect the air flow field not only in the vicinity of the wall surface but also in a wide range away from the wall surface.

Accordingly, an object of the present invention is to make it possible to detect a position of a shock wave without disposing many devices.

### SUMMARY

In general, according to one embodiment, a shock wave detection system includes a light beam emitter, a light beam receiver and an analysis unit. The light beam emitter emits a light beam oblique to a direction of an air flow through which a shock wave may propagate. The light beam receiver receives the light beam that has passed through the air flow. The analysis unit is configured to detect a presence and a position of the shock wave based on a change in a receiving position of the light beam by the light beam receiver.

Further, according to one embodiment, an aircraft includes the above-mentioned shock wave detection system.

Further, according to one embodiment, a method of detecting a shock wave includes: emitting a light beam oblique to a direction of an air flow through which the shock wave may propagate; receiving the light beam that has passed through the air flow; and detecting a presence and a position of the shock wave based on a change in a receiving position of the light beam.

### BRIEF DESCRIPTION OF THE DRAWINGS

In the accompanying drawings:
FIG. 1 shows configuration of a shock wave detection system according to the first embodiment of the present invention;
FIG. 2 shows an example of a supersonic aircraft having the shock wave detection system shown in FIG. 1;
FIG. 3 is a top view showing an example of structure of the light beam receiver shown in FIG. 1;
FIG. 4 shows an example of a bypass typically formed in the engine of the supersonic aircraft; and
FIG. 5 shows configuration of a shock wave detection system according to the second embodiment of the present invention.

### DETAILED DESCRIPTION

A shock wave detection system, a method of detecting a shock wave and an aircraft according to embodiments of the present invention will be described with reference to accompanying drawings.

### (First embodiment)

### (Configuration and functions of a shock wave detection system and an aircraft)

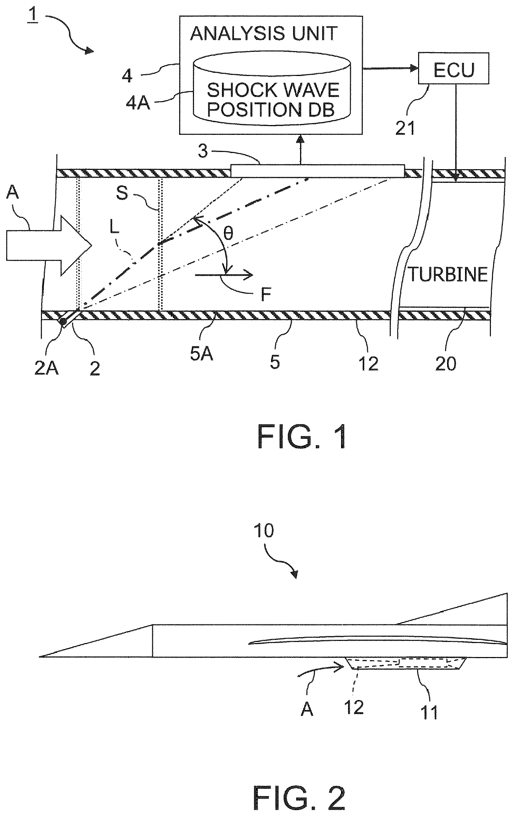

FIG. 1 shows configuration of a shock wave detection system according to the first embodiment of the present invention. FIG. 2 shows an example of a supersonic aircraft having the shock wave detection system shown in FIG. 1.

A shock wave detection system 1 is an optical system that detects a presence and a position of a shock wave S by utilizing the fact that the refractive index of the inside of the shock wave S relative to vacuum differs from the refractive index of air A outside the shock wave S relative to vacuum. Therefore, the shock wave detection system 1 includes a light beam emitter 2, a light beam receiver 3 and an analysis unit 4. The shock wave detection system 1 is attached to a flow path 5 of the air A through which shock waves S may propagate. A shock wave S whose position is to be detected is a pressure wave propagating in the air A.

For example, the shock wave detection system 1 can be disposed in each of air intakes 12 for taking air A into engines 11 of a supersonic aircraft 10 as exemplified in FIG. 2. Although the engines 11 are disposed on the lower side of the supersonic aircraft 10 in the example shown in FIG. 2, the engines 11 may be disposed on the upper side or on the lateral sides of the fuselage.

As a matter of course, the shock wave detection system 1 may be disposed not only in each of the air intakes 12 of the supersonic aircraft 10, but also in a portion of the supersonic aircraft 10 other than the air intake 12 or in an aircraft, such as a subsonic aircraft as long as a position at which the shock wave detection system 1 is disposed is in the flow path 5 of the air A in which a position of a shock wave S should be detected.

The light beam emitter 2 is an optical device that emits a light beam L, in the flow path 5, obliquely to a flow direction F of the air A in which the shock waves S may propagate. Accordingly, the light beam emitter 2 has a light source 2A and is disposed on a wall surface 5A of the flow path 5 so as to emit the light beam L toward the air A flowing in the flow path 5.

Since the refractive index of the air A flowing in the flow path 5 can be considered constant in the absence of any shock wave S, the light beam L emitted from the light beam emitter 2 travels straight. That is, the light beam L is transmitted through the air A along a linear optical path formed in the air A as the direction in which the light beam L is emitted from the light beam emitter 2 .

On the other hand, the refractive index inside the shock wave S having a density distribution is different from the refractive index of the air A outside the shock wave S. Therefore, when the shock wave S crosses the linear optical path formed in the air A as the emission direction of the light beam L emitted from the light beam emitter 2, the light beam L is refracted in the shock wave S as exemplified in FIG. 1. As a result, the light beam L that has passed through the shock wave S is transmitted through the air A along a refracted optical path. That is, when the shock wave S is present in the emitting direction of the light beam L emitted from the light beam emitter 2, the light beam L is refracted at a refraction angle corresponding to the refractive index of the shock wave S.

When the shock wave S propagates in the flow direction F of the air A along the wall surface 5A of the flow path 5, the position of the shock wave S changes in the flow direction F of the air A with time. Therefore, the position where the light beam L is refracted also changes in the flow direction F with time. Accordingly, when the shock wave S travels along the wall surface 5A of the flow path 5, the path of the light beam L changes from moment to moment. Therefore, when the light beam receiver 3 detects the light beam L whose propagation path changes with time inside the flow path 5, the position of the shock wave S can be detected.

In order to change the path of the light beam L according to the position of the shock wave S as the position of the shock wave S changes, the angle θ between the emitting direction of the light beam L and the flow direction F of the air A must be made acute or obtuse. That is, although the angle θ formed by the emitting direction of the light beam L and the flow direction F of the air A is an acute angle in the example shown in FIG. 1, the angle θ may be an obtuse angle. Note that, the incident angle of the light beam L with respect to the shock wave S is the angle obtained by subtracting the angle θ, formed by the emitting direction of the light beam L and the flow direction F of the air A, from 90 degrees.

When the angle θ between the emitting direction of the light beam L and the flow direction F of the air A approaches 90 degrees while the incident angle of the light beam L to the shock wave S approaches 0 degrees, the angle at which the light beam L is refracted by the shock wave S becomes smaller, and thereby the amount of change in the optical path of the light beam L also decreases. As a result, the resolution for detecting changes in the position of the shock wave S is reduced. Therefore, it is important to secure the angle of incidence of the light beam L on the shock wave S so that the optical path of the light beam L may change in response to the change in the position of the shock wave S by an amount sufficient to be detectable.

Conversely, if the incident angle of the light beam L to the shock wave S is too large, the traveling direction of the light beam L that has passed through the shock wave S will be the flow direction F of the air A. In this case, the light beam L that has passed through the shock wave S does not reach the light beam receiver 3. Therefore, it is important to determine an appropriate angle of incidence of the light beam L on the shock wave S by simulation and/or tests based on Snell's law (law of refraction).

In order to detect the position of the shock wave S with high accuracy, it is important to detect the position of the light beam L with high accuracy by minimizing the spread of the light beam L, i.e, the increase in beam diameter. Therefore, it is practical to use laser light as the light beam L emitted from the light beam emitter 2. That is, it is realistic to use a laser light source as the light source 2A.

On the other hand, in order to detect the position of the shock wave S with high sensitivity, it is important to prevent as much extraneous light as possible from entering the light beam receiver 3 as noise, in addition to refracting the light beam L at as large an angle as possible in the shock wave S. Therefore, the light beam L having a wavelength of not less than 740 nm and less than 780 nm can be emitted from the light beam emitter 2. Light having a wavelength of not less than 740 nm and less than 780 nm is classified as visible light when light having a wavelength of 380 nm to 780 nm is defined as visible light.

The reason why visible light having a wavelength of not less than 740 nm and less than 780 nm is emitted as the light beam L is that not only infrared light having a wavelength of not less than 780 nm is easily absorbed by the air A containing carbon dioxide and water vapor, but also infrared light that may become noise may be present in the air intake 12 of the engine 11 due to thermal radiation or the like while visible light having a short wavelength has a smaller refractive index with respect to the air A than visible light having a long wavelength.

For the above reasons, it is considered that emitting a visible laser beam, having a wavelength of not less than 740 nm and less than 780 nm, from the light beam emitter 2 is a preferable condition from the viewpoint of detecting the position of the shock wave S with high accuracy and high sensitivity.

The light beam receiver 3 is disposed at a position where the light beam receiver 3 can receive the light beam L which has been emitted from the light beam emitter 2 and passed through the air A flowing in the flow path 5 regardless of the presence or absence of the shock wave S. Therefore, the light beam receiver 3 is also disposed on a wall surface 5A of the flow path 5 so as to receive the light beam L that has crossed the inside of the flow path 5.

As described above, the emitting position of the light beam L is fixed while the receiving position of the light beam L is not fixed since the position of the shock wave S moves. Specifically, when the angle θ between the emitting direction of the light beam L and the flow direction F of the air A is an acute angle as shown in FIG. 1, the receiving position of the light beam L moves in the opposite direction to the flow direction F of the air A since the position where the light beam L is refracted moves in the flow direction F of the air A as the shock wave S travels in the flow direction F of the air A.

Therefore, it is important that the light beam receiver 3 has a light receiving area having an appropriate length in the flow direction F of the air A so that the light beam L can be received even when the receiving position of the light beam L changes due to the generation and movement of the shock wave S. Specifically, in order to allow the light beam receiver 3 to receive the light beam L regardless of the position of the shock wave S, it is necessary to determine the light receiving area of the light beam receiver 3 so that the light receiving area can cover both of the light receiving position of the light beam L when any shock wave S does not exist and the light receiving position of the light beam L when the light beam L immediately after being emitted from the light beam emitter 2 is refracted by the shock wave S as shown in FIG. 1.

For that purpose, it is necessary to dispose the light beam receiver 3, having a large number of photodetectors arrayed in the flow direction F of the air A, at an appropriate position relative to the light beam emitter 2. Since the flow path 5 forms a three-dimensional space in which the air A flows, strictly speaking, the light beam L is three-dimensionally refracted in the shock wave S. That is, since the cross-sectional position of the shock wave S and the optical path of the light beam L are not necessarily on a same plane, the receiving position of the light beam L refracted by the shock wave S is highly likely to sway not only in the flow direction F of the air A but also in a direction perpendicular to the flow direction F of the air A.

For this reason, it is practical to array photodetectors two-dimensionally in the light beam receiver 3. That is, it is practical to form a two-dimensional light detection face on the light beam receiver 3.

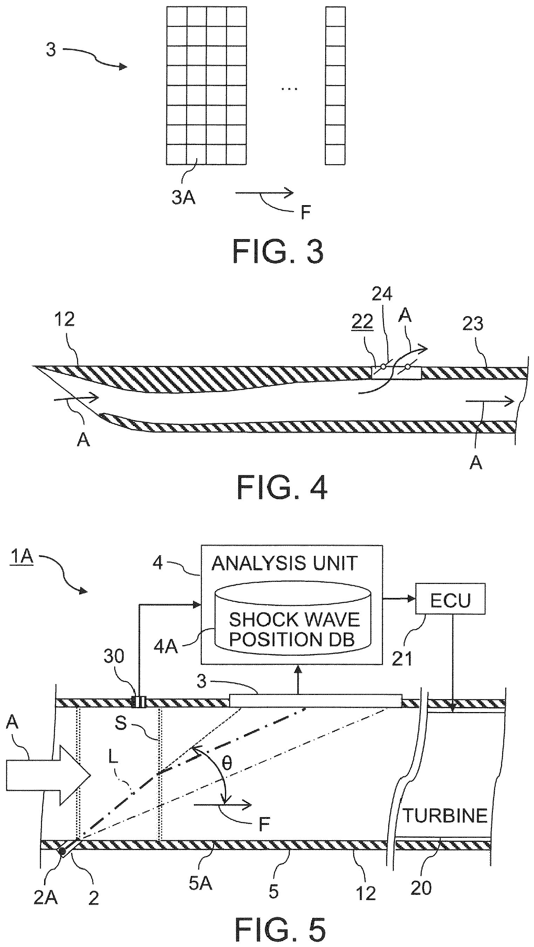

FIG. 3 is a top view showing an example of structure of the light beam receiver 3 shown in FIG. 1.

As shown in FIG. 3, photo detection elements 3A can be two-dimensionally arrayed on the detection face of the light beam receiver 3. Thereby, even when the light beam L is refracted by the shock wave S and the receiving position of the light beam L changes in a direction perpendicular to the flow direction F of the air A, the light beam L can be received by any one of the photo detection elements 3A arrayed two-dimensionally on the detection face of the light beam receiver 3.

Each photo detection element 3A of the light beam receiver 3 can consist of a photoelectric conversion element, such as a photodiode or a phototransistor. A photoelectric conversion element is an element that converts incident light into an electric signal having intensity corresponding to the light intensity and then outputs the electric signal. Therefore, an electric signal having intensity corresponding to the intensity of the incident light is output as a light detection signal from at least one of the photo detection elements 3A of the light beam receiver 3.

The range of wavelength of light detectable by the photo detection element 3A is determined according to the wavelength of the light beam L emitted from the light beam emitter 2. As a specific example, when a light beam L consisting of visible light of 760 nm is emitted from the light beam emitter 2, the photo detection elements 3A whose sensitivity regions include visible light of 760 nm are disposed in the light beam receiver 3.

Although light having a wavelength of 760 nm is classified as visible light, this wavelength is close to that of near-infrared light defined as light having a wavelength of 780 nm to 2500 nm. Easily available photo detection elements for near-infrared light include many photo detection elements that can receive visible light whose wavelength is close to that of near-infrared light. Therefore, the light beam receiver 3 may be composed of near-infrared detection elements each having sensitivity in the visible light region including a wavelength of 760 nm.

The analysis unit 4 detects the presence and the position of the shock wave S based on the change in the reception position of the light beam L by the light beam receiver 3. For this purpose, the light beam receiver 3 is configured to output detection signals of light detected by the photo detection elements 3A to the analysis unit 4. That is, the output side of the light beam receiver 3 is coupled to the analysis unit 4.

Since the light detection signals output from the light beam receiver 3 are electrical signals, the analysis unit 4 can be composed of an electronic circuit, such as a computer. When the light detection signals output from the light beam receiver 3 are analog signals, the analysis unit 4 includes an A/D (analog-to-digital) converter. The light detection signals output from the light beam receiver 3 may be converted into optical signals to be transmitted to the analysis unit 4. The analysis unit 4 may include signal circuitry, such as a noise filter, for various signal processing.

The analysis unit 4 acquires detection signals of light detected by the photo detection elements 3A arrayed two-dimensionally as exemplified in FIG. 3. Specifically, a light detection signal having intensity corresponding to the intensity of the incident light beam L is acquired from the photo detection element 3A into which the light beam L that has crossed the flow path 5 is incident. On the other hand, a signal having intensity corresponding to noise is output and no light detection signal is acquired from each photo detection element 3A into which the light beam L is not incident.

Therefore, specifying the photo detection element 3A from which the light detection signal is acquired allows identifying the position at which the light beam L is incident on the detection face of the light beam receiver 3. As long as the shock wave S does not traverse the light beam L, it is considered that the light beam L is always incident on the same photo detection element 3A assuming that errors and fluctuations are negligible. On the other hand, when the shock wave S crosses the light beam L, the light beam L is refracted in the shock wave S as described above, and thereby received at the receiving position of the light beam receiver 3 uniquely determined corresponding to the position of the shock wave S. That is, when the position of the shock wave S changes, the photo detection element 3A on which the light beam L is incident changes.

Therefore, the position of the photo detection element 3A where the light beam L is incident when the shock wave S does not cross the light beam L can be set as a reference position, and when the photo detection element 3A where the light beam L is incident changes, the position of the shock wave S can be obtained by obtaining the distance between the reference position and the position of the photo detection element 3A where the light beam L is incident.

The position of the shock wave S can be obtained based on the law of refraction using the refractive index of the shock wave S with respect to the air A as a parameter. Although the refractive index of the shock wave S with respect to the air A can be obtained by tests or adopting literature values, the relationship between the position of the shock wave S and the receiving position of the light beam L by the photo detection element 3A on the light receiving face, i.e., the relationship between the position of the shock wave S and the photo detection element 3A on which the light beam L is incident may be obtained by tests instead of actually obtaining the refractive index of the shock wave S. As a practical example, obtaining discrete data by wind tunnel tests and then interpolating the discrete data allow representing the position of the shock wave S as a function whose parameter is identification information of the photo detection element 3A on which the light beam L has been incident.

When the relationship between the position of the shock wave S and the receiving position of the light beam L is obtained by wind tunnel tests or the like, conversion information, such as a table or a function, for converting the receiving position of the light beam L into the position of the shock wave S can be stored in a shock wave position database 4A, which can be built in the analysis unit 4. In other words, the shock wave position database 4A can be constructed in storage included in the analysis unit 4. In this case, the analyzing unit 4 can obtain the position of the shock wave S directly based on the identification information of the photo detection element 3A corresponding to the receiving position of the light beam L without performing a calculation using the refractive index of the shock wave S with respect to the air A as a parameter.

Since the position of the shock wave S changes from moment to moment, the analysis unit 4 obtains time-series data consisting of the positions of the shock wave S and representing the temporal change of the one-dimensional coordinate position of the shock wave S. That is, the analysis unit 4 detects the time change in the position of the shock wave S based on the signal waveform representing the time change in the receiving position of the light beam L corresponding to the time change in the position of the shock wave S through which the light beam L passes.

When the time change of the position of the shock wave S is obtained in the analysis unit 4, flight control of the aircraft can be performed based on the obtained time change of the position of the shock wave S. Therefore, the time change of the position of the shock wave S is output from the analysis unit 4 to a corresponding device.

As a practical example, when the shock wave detection system 1 is provided in the engine 11 of the supersonic aircraft 10 as exemplified in FIG. 2, the rotational speed of a turbine 20 included in the engine 11 can be automatically adjusted based on the time change of the position of the shock wave S in the air intake 12 forming the flow path 5 of the air A as exemplified in FIG. 1.

More specifically, the engine 11 is provided with an ECU (Engine Control Unit) 21 for controlling the engine 11, and the rotation speed of the turbine 20 is controlled by control signals from the ECU 21. Controlling the rotation speed of the turbine 20 allows adjusting the flow rate of the air A supplied into the combustor of the engine 11, and thereby controlling the output of the engine 11. That is, when the rotation speed of the turbine 20 is increased, the output of the engine 11 can be increased since the flow rate of the air A supplied into the combustor of the engine 11 is increased.

The ECU 21 can be controlled manually by a pilot of the supersonic aircraft 10, and insufficient output of the engine 11 due to erroneous operation by the pilot causes abnormalities in the speeds and frequency of the shock waves S in the air intake 12. Thus, when the time change of the position of the shock wave S obtained by the analysis unit 4 shows abnormal values, the output of the engine 11 can be set to a maximum value or the like by increasing the rotational speed of the turbine 20 through the ECU 21 so that the time change of the position of the shock wave S may fall within the allowable range. Thereby, the safety of the supersonic aircraft 10 can be improved.

Other examples of a target to be controlled based on the time change in the position of the shock wave S include the flow rate of the air A flowing through a bypass for letting out excess air A from the air A flowing into the duct from the air intake 12 of the engine 11.

FIG. 4 shows an example of a bypass 22 typically formed in the engine 11 of the supersonic aircraft 10.

In case of the supersonic aircraft 10, the flow rate of the air A flowing into a duct 23 from the air intake 12 of the engine 11 becomes excessive than the flow rate required by the engine 11 at the time of deceleration from a supersonic speed. Therefore, the bypass 22 for letting out excess air A is formed in the middle of the duct 23 leading to the combustor as shown in FIG. 4.

Thus, not only the rotation speed of the engine 11 but also the flow rate of the air A flowing through the bypass 22 can be controlled based on the temporal change in the position of the shock wave S. The flow rate of the air A flowing through the bypass 22 can be controlled by adjusting the degree of opening of a valve 24 disposed in the bypass 22 with the ECU 21. Therefore, the opening degree of the valve 24 can be automatically adjusted so that the air A may flow through the bypass 22 at an appropriate flow rate corresponding to the time change in the position of the shock wave S. As a result, it is possible to suppress the occurrence of a vibration phenomenon in the flow field of the air A called buzz, and thereby to secure the thrust of the engine 11 stably.

### (A method of detecting a shock wave)

Next, a method of detecting a shock wave using the shock wave detection system 1 exemplified in FIG. 1 will be described.

When the shock wave detection system 1 is used to detect the position of the shock wave S that may propagate in the air A flowing through the flow path 5, such as the air intake 12 for taking the air A into the engine 11 of the supersonic aircraft 10, the light beam L practically consisting of laser light is continuously emitted from the light source 2A of the light beam emitter 2 toward the air A flowing through the flow path 5 as exemplified in FIG. 1. The direction in which the light beam L is emitted is made oblique to the flow direction F of the air A.

Accordingly, the light beam L that has passed through the air A is received by the light beam receiver 3 disposed in the direction in which the light beam L is emitted. When the shock wave S does not propagate through the air A within the range through which the light beam L passes, the light beam L is detected by the photo detection element 3A at the reference position since the light beam L travels straight through the air A whose refractive index can be regarded as constant. When the light beam L is detected by the photo detection element 3A at the reference position, a detection signal of the light beam L is output to the analysis unit 4.

The analysis unit 4 always determines from which photo detection element 3A among the photo detection elements 3A two-dimensionally arrayed in the light beam receiver 3 the detection signal of the light beam L has been output. Then, when it is determined that the detection signal of the light beam L has been output from the photo detection element 3A located at the reference position, it is determined that the shock wave S has not been generated in the flow path 5.

On the other hand, when the shock wave S propagates through the air A within the range through which the light beam L emitted from the light beam emitter 2 passes, the light beam L is refracted in the shock wave S, and thereby the traveling direction of the light beam L changes. Therefore, the light beam L is detected by the photo detection element 3A located at a position different from the reference position. In this case, a detection signal of the light beam L is output to the analysis unit 4 from the photo detection element 3A located at the position different from the reference position.

Therefore, the analysis unit 4 determines that the detection signal of the light beam L has been output from the photo detection element 3A located at the position other than the reference position. In this case, the analysis unit 4 determines that the shock wave S has arisen in the flow path 5. Then, the analysis unit 4 refers to the information representing the relationship between the position of the shock wave S and the photo detection element 3A by which the light beam L has been detected, which is stored in the shock wave position database 4A. Thereby, the position of the shock wave S is specified. That is, the identification information of the photo detection element 3A by which the light beam L has been detected is converted into the position of the shock wave S.

As the shock wave S propagates through the air A, the position where the light beam L is refracted changes, and thereby the reception position of the light beam L by the light beam receiver 3 also changes. Specifically, the photo detection element 3A that detects the light beam L changes with time. Accordingly, the identification information of the photo detection element 3A determined by the analysis unit 4 that the detection signal of the light beam L has been output changes. Therefore, the analysis unit 4 can obtain the temporal change in the position of the shock wave S by referring to the shock wave position database 4A.

When the time change of the position of the shock wave S is obtained, the propagation speed of the shock wave S can be calculated. In addition, it is also possible to obtain a time interval and an occurrence frequency of the shock waves S based on a difference between detection times of the shock waves S.

The time change of the position of the shock wave S obtained by the analysis unit 4 can be used for automatic control of the engine 11. For example, the time change of the position of the shock wave S can be output to the ECU 21, and then the rotation speed of the turbine 20 and the flow rate of the air A flowing through the bypass 22 can be automatically adjusted under the control by the ECU 21 based on the time change of the position of the shock wave S.

### (Effects)

As described above, in the shock wave detection system 1, the method of detecting a shock wave S, and the aircraft, such as the supersonic aircraft 10, provided with the shock wave detection system 1, the position of the shock wave S is measured based on the receiving position of the light beam L by utilizing the fact that the light beam L is refracted by the shock wave S.

Therefore, according to the shock wave detection system 1, the method of detecting a shock wave S, and the aircraft, such as the supersonic aircraft 10, provided with the shock wave detection system 1, the position of the shock wave S can be detected without disposing many devices, such as pressure holes or light sources. In particular, if a pressure hole is formed on a wall surface of a flow path, a step will be formed on the wall surface, which will affect the air flow field. On the other hand, using the optical system allows detecting the position of the shock wave S without affecting the air flow field.

In addition, emitting the light beam L obliquely to the flow direction F of the air A allows detecting not only the presence or absence of the shock wave S but also the time change in the position of the shock wave S although if the light beam L is emitted perpendicularly to the flow direction F of the air A, only the presence or absence of the shock wave S is detectable. Emitting the light beam L obliquely to the flow direction F of the air A also allows widening the area in which the shock wave S can be detected.

### (Second embodiment)

FIG. 5 shows configuration of a shock wave detection system according to the second embodiment of the present invention.

A shock wave detection system 1A in the second embodiment shown in FIG. 5 is different from the shock wave detection system 1 in the first embodiment in that a sensor unit 30 is disposed so that the position of the shock wave S can be detected even when the refractive index of the shock wave S with respect to the air A changes. Other configurations and actions of the shock wave detection system 1A in the second embodiment are not substantially different from those of the shock wave detection system 1 in the first embodiment. Therefore, the same elements and the corresponding elements are denoted by the same reference signs while explanation thereof is omitted.

The refractive indices of the air A and the shock wave S with respect to the vacuum vary depending on the atmosphere and the like. Examples of a dominant parameter for the changes in the refractive indices of the air A and the shock wave S include not only the temperature, pressure and humidity of the air A, but also the concentration of carbon dioxide contained in the air A and the wavelength of the light beam L. Accordingly, the refractive indices of the air A and the shock wave S can be previously obtained for each parameter, on which the refractive indices of the air A and the shock wave S are dependent, by wind tunnel tests and/or adopting literature values.

Then, conversion information, such as a table or a function, for converting the receiving position of the light beam L to the position of the shock wave S can be stored in the shock wave position database 4A for each combination of parameter values, such as the temperature, pressure, and humidity of the air A. Thereby, the position of the shock wave S can be obtained based on the receiving position of the light beam L even when at least one value of parameters on which the refractive indices of the air A and the shock wave S depend varies.

When the position of the shock wave S is calculated by calculation based on the law of refraction using the refractive index of the shock wave S with respect to the air A as a parameter, conversion information, such as a table or a function, representing the relationship between the value of the refractive index of the shock wave S with respect to the air A and values of parameters on which the refractive index of the shock wave S with respect to the air A depends can be obtained by wind tunnel tests or the like, and stored in a refractive index database, which can be built in the analysis unit 4. That is, the refractive index database can be constructed in storage included in the analysis unit 4 instead of the shock wave position database 4A.

On the other hand, the sensor unit 30 is disposed near the flow path 5 of the air A in order to measure values of parameters on which the refractive indices of the air A and the shock wave S depend. That is, the sensor unit 30 consisting of a group of sensors, such as a thermometer, a barometer and a hygrometer for measuring the temperature, pressure and humidity of the air A, and a carbon dioxide concentration meter for measuring the concentration of carbon dioxide contained in the air A, can be disposed at an appropriate position.

As a matter of course, each sensor can be disposed at an appropriate position instead of disposing the group of the sensors in one place as exemplified in FIG. 5. A sensor or sensors originally prepared in the flow path 5 can be used without newly installing a sensor or sensors as an element or elements of the shock wave detection system 1A.

Measured values of parameters, such as the temperature, pressure and humidity of the air A, and the concentration of carbon dioxide contained in the air A, measured by sensors of the sensor unit 30 are output to the analysis unit 4. Thereby, the analysis unit 4 can obtain the position of the shock wave S corresponding to the combination of the parameter values measured by the sensors of the sensor unit 30 by referring to the shock wave position database 4A. That is, the position of the shock wave S can be obtained based on the combination of the measured values of parameters on which the refractive indices of the air A and the shock wave S depend, in addition to the receiving position of the light beam L specified as the identification information of the photo detection element 3A into which the light beam L is incident.

Alternatively, the refractive index value of the shock wave S with respect to the air A corresponding to the combination of the measured values of the parameters measured by the sensors of the sensor unit 30 can be obtained by referring to the refractive index database. In this case, the position of the shock wave S can be obtained by calculation based on the law of refraction using the refractive index value of the shock wave S with respect to the air A as a parameter.

The refractive index of the shock wave S with respect to the air A also depends on the wavelength of the light beam L. Therefore, the position of the shock wave S may be obtained for each wavelength of the light beam L and then stored in the shock wave position database 4A. Alternatively, the refractive index of the shock wave S with respect to the air A may be obtained for each wavelength of the light beam L and then stored in the refractive index database.

In this case, it is possible to change the wavelength of the light beam L according to conditions, such as the temperature of the air A, so that the position of the shock wave S can be easily detected. Alternatively, it is also possible to emit light beams L consisting of superimposed light beams having different wavelengths. Then, the analysis unit 4 can obtain the position of the shock wave S based on the position and the identification information of the photo detection element 3A that detected the light beam L having a wavelength selected from the wavelengths.

According to the second embodiment described above, an effect that the time change in the position of the shock wave S can be detected even when the refractive index of the shock wave S with respect to the air A changes due to a change in the temperature of the air A and the like can be obtained in addition to effects similar to those in the first embodiment. In addition, obtaining the position of the shock wave S and the refractive index of the shock wave S with respect to the air A for each wavelength of the light beam L allows changing the wavelength of the light beam L used for detecting the position of the shock wave S.

## Claims

1. A shock wave detection system comprising:
a light beam emitter for emitting a light beam oblique to a direction of an air flow through which a shock wave may propagate;
a light beam receiver for receiving the light beam that has passed through the air flow; and
an analysis unit configured to detect a presence and a position of the shock wave based on a change in a receiving position of the light beam by the light beam receiver.

2. The shock wave detection system according to claim 1,
wherein the analysis unit is configured to detect a time change in the position of the shock wave through which the light beam passes, the time change in the position of the shock wave being detected based on a time change in the receiving position of the light beam, the time change in the receiving position of the light beam corresponding to the time change in the position of the shock wave.

3. The shock wave detection system according to claim 1 or 2,
wherein the light beam emitter emits the light beam consisting of a laser light having a wavelength of not less than 740 nm and less than 780 nm, and
the light beam receiver has two-dimensionally arrayed photodetectors for receiving the laser light so that a time change in a receiving position of the laser light can be detected as the change in the receiving position of the light beam.

4. An aircraft comprising:
the shock wave detection system according to any one of claims 1 to 3.

5. A method of detecting a shock wave comprising:
emitting a light beam oblique to a direction of an air flow through which the shock wave may propagate;
receiving the light beam that has passed through the air flow; and
detecting a presence and a position of the shock wave based on a change in a receiving position of the light beam.

6. The method of detecting the shock wave according to claim 5,
wherein a time change in the position of the shock wave through which the light beam passes is detected based on a time change in the receiving position of the light beam, the time change in the receiving position of the light beam corresponding to the time change in the position of the shock wave.

7. The method of detecting the shock wave according to claim 5 or 6,
wherein the light beam consisting of a laser light having a wavelength of not less than 740 nm and less than 780 nm is emitted, and
the laser light is received by two-dimensionally arrayed photodetectors so that a time change in a receiving position of the laser light can be detected as the change in the receiving position of the light beam.
